# EUROPEAN PATENT APPLICATION

(11) **EP 0 777 237 A1**
(43) Date of publication of application: **04.06.1997**
(21) Application number: 95118996.8
(22) Date of filing: 02.12.1995
(51) Int. Cl.: G21C 9/00

(54) **A device for the safety of a high risk industrial plant**

(71) Applicant: ENEL S.p.A., I-00198 Roma (IT); CISE S.p.A., I-20020 Segrate (IT)
(72) Inventor: Mantega,Franco, I-20138 Milano (IT); Penno,Enrico, I-24100 Bergamo (IT)
(74) Representative: Ferraiolo, Rossana

(57) **Abstract**

A sealed container (2) is located in a zone of a plant sensitive to the increase in temperature caused by a serious accident and contains a fluid (3) that is able to change state when it reaches the temperature induced by the accident creating in container (2) a pressure and/or temperature such that it may open a separator disk (5) fitted in a duct (4) that connects the inside of the container with a means (8) that uses the pressure arriving from the container to reduce the consequences of the accident.

## Description

The present invention concerns a device for the safety of a high risk industrial plant, more especially a passive thermal device for the safety of a nuclear reactor.

The risk connected to an industrial activity depends on the probability of the events that start off an accident, on the evolution of the accident and on the response to reduce its consequences given by the systems foreseen.

In general, the reliability of the safety devices that must operate in the hostile conditions arising from the greatest credible accident must be measured against the damages connected to their not taking action.

The safety analysis of a plant consists in considering the various credible accident sequences, in foreseeing their probability and in assessing the consequences on the outside environment. The result of this analysis is the designing of the safety systems, characterized by great reliability, with the purpose of reducing the probability of an accident or limiting its consequences.

In a nuclear reactor the greatest damage is produced by those sequential incidents that, though highly improbable, lead to the fusion of the core, the penetration of the vessel by fusion materials and the consequent strong release of fissile products from the fuel (Serious Accident). As a consequence there is a rapid increase of temperature and pressure within the container.

In these conditions, the container serves the dual purpose of resisting the thermal and mechanical loads and to keep the fission products released by the fuel confined within itself.

In the recent past, the safety devices used to face the reference accident (Design Basis Accident) were based on the action of a sensor, of a regulator and an actuator; hence they were active systems that, however reliable, after long periods of inactivity, presented a certain probability of malfunctioning at the moment of a request.

In general, these systems require a correct functioning of the instruments set to detect the accident conditions, of the transmission lines for the signal, of the equipment for its processing and, finally, the functioning of the safety system. The entire sequence further depends on the availability of electric powering.

Also in the case of equipment with "fail safe" logic, that is that switch to the safety position in a passive manner following a failure, the detection of the accident conditions is required (signal from instruments) or else one has a spurious type of action.

Currently, the problem of confronting a Serious Accident tends to be solved with Passive type systems and, where possible, of an Intrinsic type.

According to the IAEA definition, a passive system is intended as being a device the functioning of which does not depend on active organs (pumps, actuated valves, etc.), but rather on natural principles (gravity, natural thermal exchange, etc.) An example of passive system is the PCCS system (Passive Containment Cooling System) foreseen by Westinghouse for the AP600 reactor, that is able to transfer heat directly through the containment structure to the outside environment. Outside the containment structure a baffle is located with the function of increasing the natural air circulation.

An intrinsic system is intended as an action directly linked to an accidental phenomenon, e.g. the expansion of a gas, the change in the density or change of state of a liquid, the fusion of a metal (pure or eutectic) consequent to an increase in temperature. An example of intrinsic system is the Density Lock used by ABB in the PIUS reactor in which the onset of natural cooling circulation is realized through the variation in the density of the refrigerant in the Density Lock consequent to the increase in temperature.

The condition that causes the action of the device that is the subject of the present invention is the reaching of the typical accident temperature in the premises where it is installed.

In order to simplify the disclosure herein, the word - fluid - will be used to define a liquid or a mixture of liquids or else a gas or a mixture of gasses having the desired temperature/pressure characteristic that make them suited to use in the safety device invented.

The essential characteristic of such a fluid is that, when a temperature induced by an accident is reached, that we conventionally define as the critical temperature, it is able to change its state acquiring, within the environment in which the change of state has taken place, a pressure, that we shall conventionally define as the operating pressure, suited to activate the device that uses this pressure.

The device invented comprises a sensibly constant volume sealed container that contains a volume of fluid able to change state when it reaches a critical temperature induced by an accident so as to acquire the operating pressure within said container; a duct that connects said container with the device that uses the operating pressure; a separator disk set in said duct that opens when the pressure in said container reaches the value of said operating pressure that breaks it or else causes the pre-determined critical temperature to melt it.

Said container has a volume that may vary from a few millilitres to various cubic metres. The quantity of fluid that is introduced into the container varies according to the operating pressure that one wants to obtain at the time of an accident. If the fluid is a gas or a mixture of gases, it will be useful to add an easily monitored gas, such as helium, in order to be able to check the sealing of the device through time. The fluid is preferably a mixture of various Chloro-fluoro-carbide and inert gasses such as helium or nitrogen or organic compounds such as phenols that offer the following additional features:
- no sensitivity to aging;
- high resistance to radiological and neutronic damages;
- they are non corrosive or non flammable, according to needs;
- they are dielectric.

If the fluid is a liquid or a mixture of liquids, a sublimating material may be added to it that, when the temperature drops owing to the accident recovery stage, can form solid caps in the component connected to the container corresponding to the possible leakage points.

It is understood that the separator disk is designed so as to have pressure and/or temperature resistance characteristics such as to ensure its opening when the typical environmental conditions of an accident occur in the atmosphere in which the container is set.

The separator disk of the pressure breakage type can be a stainless steel film and if the separator disk is of the melting type it can be made of a low melting point alloy, such as Wood's eutectic alloy.

The container is set in a position considered significant by the designers.

When the accident takes place, the container and its contents reach the critical temperature (higher then the highest hypothetical temperature possible during normal plant operations) hence the fluid is subjected to a change of state with the consequent passage to the operating pressure that, after the opening of the separator disk, is transferred to the application device.

The application device using the operating pressure of the fluid may for example consist of:
- a valve actuator,
- a tank containing a liquid, where a pumping action without any mechanical organs is required,
- a tract of plant (e.g. between two insulating organs) where it is necessary to create conditions of higher pressure than those of the same plant, with the purpose of improving the insulating functions towards the external environment from a generally contaminated fluid contained in the same plant.

The device invented generally offers the following advantages:
- it confers the intrinsic/passive requisite to the action of the systems (that are currently functional in an active manner) suited to limiting the consequences of a Serious Accident and especially to performing the important function of insulating from penetrations of the Containment System of a Nuclear Reactor,
- it realizes in an intrinsic and passive manner the positive control of the leaks by pressurizing the outside of the penetrations of the container at a pressure greater than that of the internal pressure,
- it ensures action also in the case of a malfunction causing the failure of the conventional device,
- it allows use when a volume of a few millilitres is required and when the volume of fluid required is a few cubic metres,
- it is extremely simple both in design and in the realization,
- the shape of the container may be studied as a function of its physical setting and, for large volume containers, it may have geometries that allow an optimum heat exchange between the incidental atmosphere and the contained fluid, or else to obtain previously calculated delays in the action,
- the fluid may be of dielectric type and hence be used in electric penetrations,
- it is characterized by a very low probability of spurious action; in fact, a pressure breakage separator disk has very low probabilities of breaking at pressures lower than the designed ones even after a long time from its installation; if the separator disk is of the melting type, then this probability is practically null.

In order to better explain the invention examples of embodiment with reference to the attached drawings are provided, in which:
Figure 1 is a lateral view of the device,
Figures 2 to 5 are drawings of different uses of the device, and
Figure 6 is a longitudinal section of a separator disk bearing block.

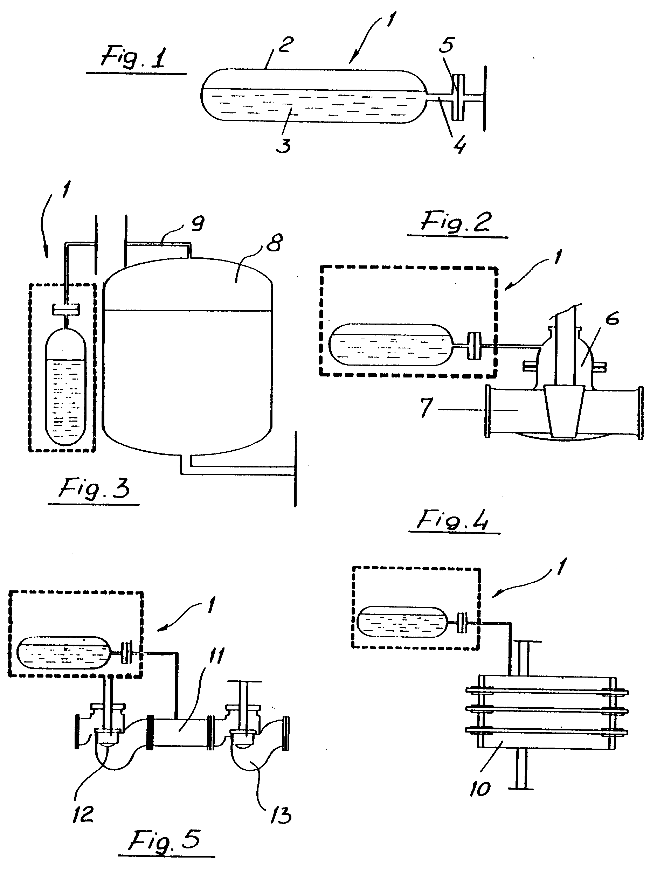

Fig. 1 shows an invented device 1 comprising a steel container 2 full of water 3 to ¾ of its volume; a pipe 4 connects the inside of the container 2 with an organ that will be pressurized to actuate the safety means, not shown, while in the pipe a separator disk 5 is fitted made of a stainless steel film that breaks as soon as the pressure of the steam generated by the heating of the water 3 has reached the pre-set operating pressure or as soon as it reaches the pre-set critical temperature.

Fig. 2 shows how an invented device 1 is used to pressurize the internal chamber 6 included between the two sites, not shown, of a shutter valve 7 at a pressure higher than that of the same line passing through the sites.

Figure 3 shows an invented device 1 used to realize a pumping effect in a tank 8; in this case device 1 is located within the plant (not shown) in which the accident may occur, while the tank 8 is located outside the plant; a convenient duct 9 connects the device 1 to tank 8.

Figures 4 and 5 show an invented device 1 used to pressurize, respectively, the internal chamber 10 of electric penetrations in a Nuclear Reactor and the internal chamber 11 included between two insulating valves 12 and 13 of a penetration (typical nuclear solution) at a pressure value higher than that in the containment structure during the accident.

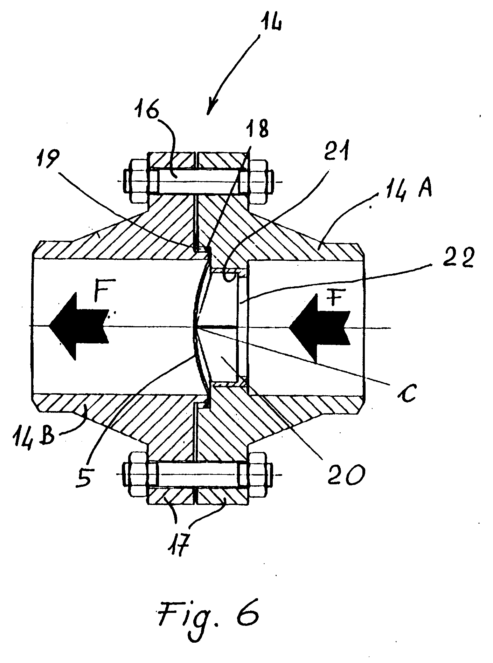

Fig. 6 shows a steel element 14 made to contain a separator disk of stainless steel 5 and to be set in duct 9 of Fig. 3, not shown here; arrows F show the direction in which the pressure is exerted in case of an accident; element 14 is made of two parts 14A and 14B fastened one to the other by means of a number of bolts 16 fastened around the perimeter of flange 17; the separator disk 5 has the shape of a cup with the concave side facing the tank 2 visible in Fig. 1 and has a perimetral border welded to part 14A by a continuous weld bead 18 received into chamber 19 between the above mentioned parts so as to ensure the sealing of the device; in order to avoid that the separator disk 5 breaks owing to a pressure arriving from the opposite side of the container 2, it is supported at the centre C of the concave part by the ends of three plates 20 set at 120° radial positions, within a perimetral border 21 realized in passage 22.

## Claims

1. A safety device (1) for a high accident risk industrial plant involving an increase in the temperature in the area and within the material involved in the accident characterized in that it comprises:
- a sealed container (2) with sensibly constant volume located in a zone of the plant sensitive to said temperature increase, in which a volume of fluid (3) is contained that is able to change state when it reaches the critical temperature induced by the accident in order to acquire an operating pressure within said container (2),
- a duct (4) that connects the inside of said container (2) with a means that employs said operating pressure (6, 8, 10, 11),
- a separator disk (5) set in said duct (4) and with thermal-mechanical resistance characteristics such as to make it open when said fluid has reached the thermal-mechanical conditions induced by an accident.

2. Device according to claim 1 characterized in that said separator disk (5) has mechanical resistance characteristics such as to break under the effect of said operating pressure.

3. Device according to claim 1 characterized in that said separator disk (5) has thermal resistance characteristics such as to melt under the effect of said critical temperature.

4. Device according to claim 2 characterized in that said separator disk (5) is made of a metal in order to break under said operating pressure.

5. Device according to claim 3 characterized in that said separator disc (5) is made of an eutectic alloy that melts at the critical temperature.

6. Device according to claims from 1 to 5 characterized in that said fluid is a mixture of gasses in which at least one gas can be monitored in order to allow periodic checks of the sealing of the device (1).
